# EUROPEAN PATENT SPECIFICATION

(11) **EP 1 566 123 B1**
(45) Date of publication and mention of the grant of the patent: **15.04.2009**
(21) Application number: 05250980.9
(22) Date of filing: 22.02.2005
(51) Int. Cl.: A47J 27/21, A47J 36/02, H05B 3/78

(54) **Noise reduction in water heating vessels**
Geräuschminderung in Wasserkochkesseln
Réduction de bruit dans récipients pour chauffer de l'eau

(30) Priority: 23.02.2004 GB 0403954; 22.03.2004 GB 0406429
(43) Date of publication of application: 24.08.2005
(73) Proprietor: STRIX LIMITED, Ronaldsway, Isle of Man IM9 2RG (GB)
(72) Inventor: Johnston, Richard, Isle of Man IM9 5LQ (GB); Scott, Michael James, Isle Of Man IM9 5PH (GB)
(74) Representative: Samuels, Adrian James

(56) References cited:
- DE-A1- 19 825 835
- GB-A- 2 386 532
- JP-A- 09 023 976

## Description

This invention relates to electric water heaters and to vessels incorporating such heaters which are adapted to reduce the amount of noise generated during heating.

Over recent years, the demand for shorter heating times in kettles and jugs has lead to an increase in the power of a typical heater from around 2.2 kW to around 3 kW. This power increase has been achieved without increasing the size of the heater so that the appliance does not need to be made larger to accommodate a larger heater. Thus the increase in heating power has lead to an increase in the power density applied to the heater's surface. This has, in turn, modified the process of heat transfer between the heater and the water being heated.

The change in the heating process has resulted in an increase in the noise generated by kettles and jugs during heating. This noise is generally considered undesirable.

In GB-A-2386532 the Applicant set out details of various coatings that can be applied to the water-facing surface of an electric water heater in order to reduce the incidence of local nucleate boiling and thus reduce the amount of noise generated. Specific reference should be made to GB-A-2386532 for details of suitable coatings and their methods of application, but generally they comprise applying a coating over the water-facing surface of the heater the coating having, at a micro-level, adjacent regions which have different surface tension properties. As is explained in the aforementioned document, this limits the size to which bubbles grow as a result of nucleate boiling and therefore the amount of noise generated.

These coatings have been shown experimentally to be successful in reducing the amount of noise generated.
As described in GB-A-2386532, the noise reduction effect can be enhanced by incorporating a scale shedding additive such as PTFE to the coating. It has been confirmed experimentally however that the amount of additive which can be incorporated is limited by the tendency for the heater to promote film boiling at its surface in use. Film boiling is undesirable since the resultant layer of steam reduces heat transfer from the heater to the water and therefore causes the temperature of the heater to increase. This can lead to premature operation of thermal protection devices which is known as Dry Boil Interference (DBI).

An alternative way of reducing boiling noise is disclosed in JP 9-23976. In this arrangement the heating base of the vessel is formed with a plurality of projections.

It is an object of the present invention to alleviate the problems set out above and when viewed from a first aspect the present invention provides an electric water heater comprising a noise reduction coating only on part of its water-facing surface such that a region of the water-facing surface intended in use to be directly above a thermal sensor is substantially free of said coating.

The invention extends to a method of applying a treatment to an electric water heater comprising applying a coating to only a part of the water-facing surface of the heater such that a region of the surface intended to be directly above a thermal sensor in use is left without said coating. The invention also extends to a water heating vessel, preferably a water boiling vessel, incorporating such a heater; and to a heater as defined herein with at least one thermal sensor directly beneath said uncoated region..

Thus it will be seen by those skilled in the art that in accordance with the present invention part of the heater surface where temperature is sensed is left free of the coating. This means that the tendency for dry boil interference will be significantly reduced since film boiling will not occur above the thermal sensor as a result of the noise reduction treatment. This means that the treatment may be optimised for noise reduction without having to compromise to reduce film boiling.

It is particularly preferred that the coating covers at least the portion of the water heating surface directly above the heater so that the degree of noise reduction need not be significantly adversely affected. In one preferred example, the coating pattern has the shape of an annulus leaving the centre of the heater surface uncoated so as to correspond generally to the standard shape of a sheathed heating element attached to the underside of the heater.

As well as the advantages set out above, it will also be appreciated of course that in accordance with the invention where a coating is applied to the surface of the heater, the amount of coated material required is reduced with an attendant cost saving. The arrangement in accordance with the invention will also reduce the actual incidence of film boiling even in the coated region since the bubbles generated will be dissipated when they reach the boundary between the coated and the uncoated regions and the overheating effect of film boiling which does occur will be limited since heat may still be conducted laterally from the coated to the uncoated region (e.g. by means of a diffuser plate well known *per se* in the art) and thence from the uncoated region to the water.

The coating may comprise any coating giving a noise-reducing effect but preferably the coating is one giving rise to adjacent micro-regions with different surface properties, preferably different surface tension properties, as specified in GB-A-2386532.

The coating may be applied in any convenient way, e.g. using a mask and spray or screen printing. In accordance with at least some preferred embodiments however the liquid-facing surface of the heater is raised in the coated region. This is beneficial since if the region of the heater which is to receive the coating is raised above the rest of the heater, the coating may simply be applied by a roller without the need to mask the rest of the heater. Where as is preferred the coating is over the element, the additional advantage is achieved that the corresponding recess on the dry side of the heater can help to locate the element during assembly.

It is thus a preferred feature of heaters disclosed herein that the coated part of the heater is raised above the rest of the heater. Methods of making heaters as disclosed herein preferably include the step of providing a heater having a raised portion and applying said noise reduction coating only to said raised portion.

Further details of treatments disclosed in GB-A-2386352 which may be used in accordance with the present invention are set out below.

The heater surface treatment comprises a coating to provide the necessary surface properties. Such a coating may, for example, be a two-phase or a multi-phase coating, comprising particles which provide nucleation sites for bubbles and a matrix acting to disrupt the growth of the bubbles.

The particle size is also important in the operation of the coating. If the particles are too small, they may be completely retained within the coating matrix and thus not penetrate the surface and thus not act as nucleation sites for bubble formation. Preferably, therefore, the additive particle size is less than 0.5 mm. Preferably it is above 20 microns, more preferably more above 50 microns and most preferably between 100 and 300 microns. As an example, a particularly suitable additive is one in which 50-75% of the particles pass through a 45 micron mesh opening size, 93-99% through a 90 micron opening and 100% through a 150 micron mesh size (i.e. a nominal 150 µm size).

The method of coating deposition also has an influence on the size of additive particles. In spray or roller coating, it has been found that a smaller additive particle size may be used successfully than that used in a curtain coating process in which a "curtain" of coating material falls onto a moving substrate. This may be due to the curtain coating method leading to align particles in a certain direction as the coating flows and settles on the substrate. For example, whilst a nominal 150 µm additive size may be used in a spray or roller process, a nominal 250 µm size may be needed in a curtain coating process.

A so-called "dry" spraying process is preferred in some circumstances in that it promotes the deposition of the particles nearer the surface. Typically the spray process is performed with a higher percentage of air in the spray mix than is traditional, and the spray head held away from the surface being coated by typically 20-30 cm. The average spacing between particles should preferably be of the same order as the particle size.

The particles are preferably inorganic such as mica, aluminium, silica, glass, quartz or so on.

It has been found that over time and with continuing use the performance of certain particulate material, for example mica, degrades with an associated increase in the sound levels. In order to reduce this effect, more stable materials such as quartz or glass may be used. However, the performance of other materials such as mica can be significantly improved by treatment to reduce or prevent water adsorption onto the particle surface. Preferably, therefore, the particulate additive is pre-treated to reduce water adsorption onto the additive surface.

The additive particles may therefore be treated with a waterproofing agent such as silane or siloxane, which are widely available commercially. Alternatively the additive particles may be treated with materials which are typically used in coating products containing aluminium flakes in order to reduce the aluminium corrosion. Examples of such treatments include the use of polymer coated acrylate and polymer coated resist which also posses dielectric properties. These materials and processes are available commercially from Eckart GmbH.

It is undesirable to add too much particulate to the coating, since the particles tend to act as nucleation sites for the formation of scale. This in turn may cause the temperature of the heater to rise, which may interfere with normal operation of a thermally sensitive control for the heater. Preferably, therefore, the particles constitute less than about 3% by weight of the finished coating, more preferably about 1-3% by weight. The particles may therefore comprise typically less than about 1% by weight of the coating prior to application, and more preferably between about 0.3-1% by weight. This is found to optimise both the sound and scale performance of the heater.

It has also been found that as well as having an influence on the size of additive particle that may be used in a coating, the method of application may also influence the percentage of additive in the coating. In particular, while a figure of approximately 1% by weight of applied and cured coating might be used in a spray or roller coating method, a figure of approximately 3% by weight may be more appropriate in a curtain coating process.

As stated above, the problem with adding too much particulate to the coating is that it will promote adhesion of scale. This effect can be alleviated by adding a scale shedding additive such as PTFE to the coating. It has been found that the presence of less than about 0.5% by weight, more preferably between 0.1 - 0.3% by weight, in the finished coating (corresponding typically to 1-3% of a PTFE dispersion in the coating prior to application) gives good results. Also, due to the surface tension differences between PTFE and say PES as a matrix, the noise reduction is improved as well.

The matrix may be organic or inorganic, but it is preferably organic, for example PTFE, PES (polyethersulfone), polysiloxane, PPS (polyphenylene sulfide), epoxy or PET (polyethylene terephthalate).
The matrix may contain fillers, such as pigments, as is known in the coating art.

The matrix is preferably a material which has good scale release properties, such as Greblon®.

A coating which has been found to be suitable is Chemlon X7541A produced by Akzo Nobel. This coating comprises a base polymer matrix consisting of 80% PES 20% PTFE, with 2% by weight of mica particles added.

The coating is preferably 5-50 microns thick, more preferably 5-25 microns thick and most preferably 10-20 microns thick and may be applied by any suitable method, for example spraying, dipping, roller or curtain coating.

In tests using the aforementioned X7541A coating, a significant reduction in noise levels has been achieved.

Other suitable coatings are discussed below.

A finished coating which is particularly suited for planar thick film heaters is a PES matrix containing a TiO₂filler (typically 85-90% by weight PES, 5-10% by weight filler), 1-3% by weight mica particles, and 0.1% by weight PTFE. A figure of 1% mica particles is suitable for spray or roller application while 3% is more appropriate for curtain coating application. Thick film heaters are quite sensitive to film boiling, as the temperature of the heater substrate can rise very rapidly when film boiling occurs, leading to inadvertent operation of a control associated with the heater. Accordingly the percentage of PTFE is relatively low.

A formulation which is particularly suited to planar elements comprising a metallic substrate with a sheathed heating element secured thereto comprises, as before, PES matrix with TiO₂ filler, 1% by weight mica and 0.3% by weight PTFE. Such coatings would normally be sprayed due to edge formations on the heater (such as mounting formations as disclosed in WO 96/18331) preventing a curtain coating method being used. A sheathed element construction is less sensitive to film boiling, as its thermal capacity tends to be greater than that of a thick film heating element, so a higher percentage of PTFE can be used in this coating.

In the embodiments described above the coatings may be prepared by mixing together dispersions of PES, TiO₂ and PTFE and mica in the appropriate percentages to give the desired percentages of components in the finished coating.

After mixing, the coating may be applied to a substrate using a spray, roller or other coating technique as appropriate. The substrate is typically stainless steel, for example a 300 or 400 series stainless steel and is typically a plate of 0.5-1.5mm thickness.

To prepare the substrate for coating the substrate is preferably grit blasted to a roughness of 2.5-3.0 Ra and degreased.

After application, the coating is cured for 10 minutes at 375EC.

It will be immediately apparent to those skilled in the art that there is a clear distinction between the coated and uncoated areas of the water-facing surface of heaters in accordance with the present invention, this being a macro property of the heater as a whole; and the adjacent regions of differing surface tensions which define the noise reduction treatments and coatings set out above and in GB-A-2386532. By way of example, although the coated and uncoated regions of heaters described herein may have different macro surface tension properties, this will not of itself lead to any reduction in noise.

Where the term "uncoated region" is used herein this should be understood to mean a region of the heater surface which is substantially free of the noise reduction coating, which is applied elsewhere on the heater. Such an "uncoated region" may have one or more other coatings performing other functions.

The uncoated region of the heater set out herein may overlie a single thermal sensor, in which case the thermal sensor is preferably a primary overheat sensor since this is normally arranged to operate at a lower temperature than a secondary thermal sensor and is thus more prone to DBI. In preferred embodiments, however, the uncoated region corresponds to both or all thermal sensors provided. Of course, the uncoated region need not be in one piece but could comprise two separate uncoated areas. Similarly, the coating may be in a plurality of discrete areas rather than a continuous region.

The thermal sensor beneath the uncoated region in use could be of any known type, for example a bimetallic actuator, thermal fuse, thermistor etc.

Some preferred embodiments of the invention will now be described, by way of example only, with reference to the accompanying drawings in which:

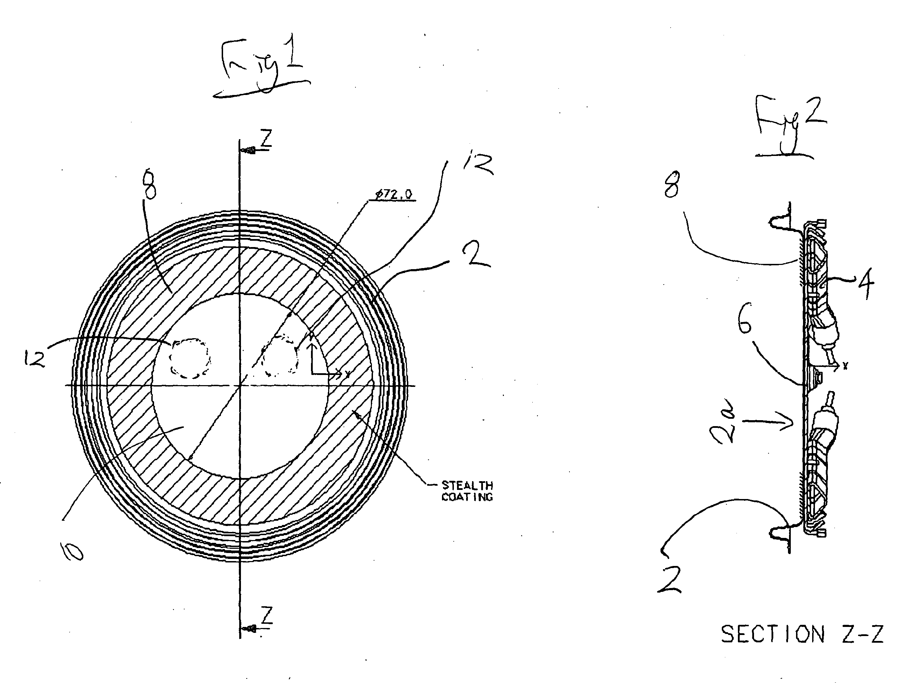

Fig. 1 is a plan view of a water heater in accordance with the invention;
Fig. 2 is a sectional view on the line Z..Z of Fig. 1;
Fig. 3 is a perspective view of another embodiment of the invention with a raised portion;
Fig. 4 is a perspective view of the underside of the heater of Fig. 3; and
Fig. 5 is a cross-sectional view, with detail portion, of the heater of Figs. 3 and 4.

The Figures show a generally standard sheathed underfloor heating element which comprises a generally dish-shaped plate 2 to the underside of which is mounted a sheathed electrical resistance element 4 with a disc-shaped thermal diffuser plate 6 sandwiched between them. The plate 2 is made from stainless steel as is well known in the art.

The water-facing surface of the heater 2a is treated by applying a region of noise reduction coating 8 which is annular in shape. The noise-reduction coating 8 may be formed of any of the materials set out in GB-A-2386532. To give a non-limiting example, the coating may be a polyethersulfone (PES) matrix with titanium dioxide filler with 1% by weight mica and 0.3% by weight PTFE.

It will be seen from the Figures that the coating 8 overlies the heating element sheath 4.

The coating 8 defines a circular central region 10 which does not have the coating. As will be seen by their dashed outlines, the two bimetallic actuators 12 of one of the Applicant's U17 or U18 series of controls are located in use beneath this uncoated region.

In use of the heater, heat from the element 4 will be transferred to the water predominantly by means of a direct path through the heat diffuser plate 6 and the heater plate 2 and the coating 8 thereon. Even if the heater 4 is of a modern high powered variety such as with a rating of 3kW, the adjacent regions of differing surface tension properties at a microscopic level in the coated region 8 will substantially reduce the size to which bubbles grow during nucleate boiling and therefore the noise which is generated. Since there is a shorter thermal path directly through the diffuser plate 6 and heater plate 2 than one involving the lateral conduction of heat by the diffuser plate 6, heat transfer from the central region 10 to the water will be relatively low and thus no significant noise will be generated by such transfer.

The presence of PTFE in the coating 8 does give some tendency for film boiling across the coating to take place. However, the annular shape and relatively limited extent of the coating 8 tends to minimise this. Furthermore, even if this should take place, heat transfer to the water may still take place laterally through the diffuser plate 6 and the uncoated region 10. Since film boiling does not occur in the region of the heater plate above the bimetallic actuators 12, there will not be a tendency for these to operate prematurely and therefore disrupt heating during normal operation.

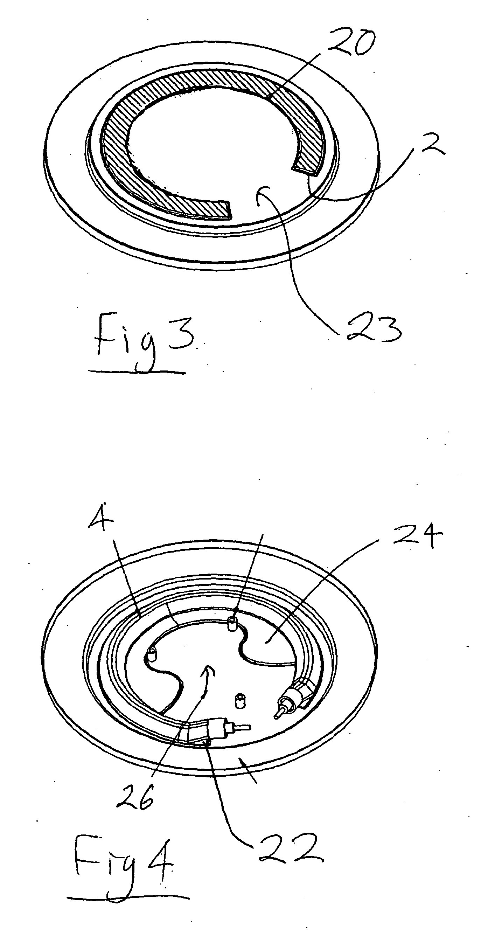

Turning to Figs 3 to 5, a further embodiment of the invention is shown. In this embodiment the noise reduction coating 20 is applied to a raised region 22 of the heater plate 23. The sheathed element 4 is received in a recess on the dry side formed by the raised region 22. This enables the coating 20 to be applied simply using a flat roller without the need to use a mask since the rest of the heater surface 23 will not come into contact with the roller.

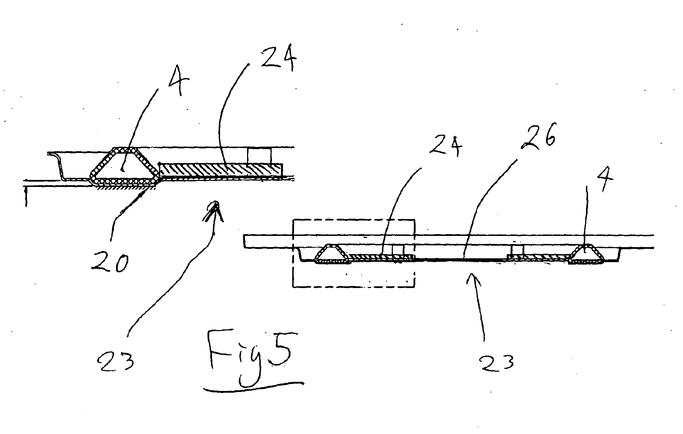

As will be appreciated particularly from Fig. 5, in contrast with the first embodiment the sheathed element 4 is in direct contact with the heater plate 23 - i.e. there is no diffusion plate between them. There is however a heat diffusion member 24 inwardly of the element 4 which is approximately C-shaped and partly surrounds a region 26 inwardly thereof with no heat diffusion member. The heat diffusion member 24 is in good thermal contact with the heater plate 23 and the side wall of the sheathed element 4. This represents a cost reduction over the diffuser plate 6 of the first embodiment.

It will be appreciated by those skilled in the art that the above is only one possible application of the principles of the invention and there are many further possibilities. For example, the coated region need not have the shape shown and could be any suitable noise reducing material. Although the noise reduction coating is preferably one of the ones set out in GB-A-2386532, this is not essential.

## Claims

1. An electric water heater (2;23) **characterised by** comprising a noise reduction coating (8;20) only on part of its water-facing surface (2a) such that a region of the water-facing surface (2a) intended in use to be directly above a thermal sensor (12) is substantially free of said coating (8;20).

2. A method of applying a noise reduction coating (8;20) to an electric water heater (2;23), **characterised by** applying said coating (8;20) to only a part of the water-facing surface (2a)) of the heater (2;23) such that a region of the surface (2a) intended to be directly above a thermal sensor (12) in use is substantially free of said coating (8;20).

3. A heater or method as claimed in claim 1 or 2 wherein at least a portion of the water-facing surface (2a) directly above a heating element (4) is coated.

4. A heater or method as claimed in claim 3 wherein the coated region has the shape of an annulus leaving the centre (10) of the heater surface untreated.

5. A heater or method as claimed in any preceding claim wherein said heater (2;23) comprises a sheathed heating element (4) mounted or attached to the underside thereof.

6. A heater or method as claimed in any preceding claim wherein the coated region comprises adjacent micro-regions with different surface tension properties.

7. A heater or method as claimed in any preceding claim wherein the coating (8;20) is a two-phase or multi-phase coating, comprising particles which provide nucleation sites for bubbles and a matrix acting to disrupt the growth of the bubbles.

8. A heater or method as claimed in claim 7 wherein the additive particle size is less than 0.5 mm.

9. A heater or method as claimed in claim 8 wherein the additive particle size is above 20 microns, more preferably more above 50 microns and most preferably between 100 and 300 microns.

10. A heater or method as claimed in any of claims 7 to 9 wherein the average spacing between particles is of the same order as the particle size.

11. A heater or method as claimed in any of claims 7 to 10 wherein the particles are inorganic for example mica, aluminium, silica, glass or quartz.

12. A heater or method as claimed in any of claims 7 to 11 wherein the particulate additive is pre-treated to reduce water adsorption onto the particle surface.

13. A heater or method as claimed in any of claims 7 to 12 wherein the particles constitute less than about 3% by weight of the finished coating, more preferably about 1-3% by weight.

14. A heater or method as claimed in any of claims 7 to 13 wherein a scale shedding additive is added to the coating.

15. A heater or method as claimed in claim 14 wherein the scale shedding additive forms less than about 0.5% by weight, more preferably between 0.1 -0.3% by weight, in the finished coating.

16. A heater or method as claimed in any of claims 7 to 15 wherein the matrix is organic, for example PTFE, PES (polyethersulfone), polysiloxane, PPS (polyphenylene sulfide), epoxy or PET (polyethylene terephthalate).

17. A heater or method as claimed in any of claims 7 to 16 wherein the matrix contains fillers such as pigments.

18. A heater or method as claimed in any of claims 7 to 17 wherein the finished coating comprises a PES matrix containing a TiO₂ filler (typically 85-90% by weight PES, 5-10% by weight filler), 1-3% by weight mica particles, and 0.1% by weight PTFE.

19. A heater or method as claimed in any of claims 7 to 17 wherein the finished coating comprises a PES matrix with TiO₂ filler, 1% by weight mica and 0.3% by weight PTFE.

20. A heater or method as claimed in any of claims 7 to 19 wherein said coating is applied using spray, roller or other coating technique.

21. A heater or method as claimed in claim 20 wherein the coating is dry sprayed.

22. A heater or method as claimed in any preceding claim comprising a thermal sensor (12) below said uncoated region.

23. A heater or method as claimed in claim 22 comprising two thermal sensors (12) below said uncoated region.

24. A liquid heating vessel comprising a heater as claimed in any preceding claim.

25. A liquid heating vessel as claimed in claim 24 adapted to boil water.

26. A heater or vessel as claimed in claim 1 or any of claims 3-25 wherein the part of the water-facing surface (22) of the heater on which said coating (20) is provided is raised above the rest of said surface (2a).

27. A method as claimed in any of claims 2 to 23 comprising providing a heater having a part of its water-facing surface (22) raised above the rest of the surface (2a) and applying said treatment (20) to said raised part (22).

28. A method as claimed in claim 27 wherein said step of applying said treatment (20) comprises applying a coating using a roller.

## Patentansprüche

1. Elektrischer Wasserheizer (2; 23), **dadurch gekennzeichnet, dass** er eine Geräuschminderungsbeschichtung (8; 20) aufweist, die auf nur einem Teil seiner zum Wasser weisenden Oberfläche (2a) vorhanden ist, so dass ein Bereich der zum Wasser weisenden Oberfläche (2a), der im Gebrauch direkt oberhalb eines thermischen Sensors (12) liegen soll, von der Beschichtung (8; 20) im Wesentlichen frei ist.

2. Verfahren zum Aufbringen einer Geräuschminderungsbeschichtung (8; 20) auf einen elektrischen Wasserheizer (2; 23), **dadurch gekennzeichnet, dass** das Aufbringen der Beschichtung (8; 20) auf nur einen Teil der zum Wasser weisenden Oberfläche (2a) des Heizers (2; 23) erfolgt, so dass ein Bereich der Oberfläche (2a), der im Gebrauch direkt oberhalb eines thermischen Sensors (12) liegen soll, von der Beschichtung (8; 20) im Wesentlichen frei ist.

3. Heizer oder Verfahren nach Anspruch 1 oder 2, worin zumindest ein Abschnitt der zum Wasser weisenden Oberfläche (2a) direkt oberhalb eines Heizelements (4) beschichtet ist.

4. Heizer oder Verfahren nach Anspruch 3, worin der beschichtete Bereich die Form eines Rings hat, der die Mitte (10) der Heizeroberfläche unbehandelt belässt.

5. Heizer oder Verfahren nach einem vorhergehenden Anspruch, worin der Heizer (2; 23) ein abgeschirmtes Heizelement (4) aufweist, das an seiner Unterseite angebracht oder befestigt ist.

6. Heizer oder Verfahren nach einem vorhergehenden Anspruch, worin der beschichtete Bereich benachbarte Mikrobereiche mit unterschiedlichen Oberflächenspannungseigenschaften aufweist.

7. Heizer oder Verfahren nach einem vorhergehenden Anspruch, worin die Beschichtung (8; 20) eine zweiphasige oder mehrphasige Beschichtung ist, die Partikel, die Ausgangsstellen für Blasen vorsehen, sowie eine Matrix, die die Wirkung hat, das Wachstum der Blasen zu unterbrechen, aufweist.

8. Heizer oder Verfahren nach Anspruch 7, worin die Additivpartikelgröße geringer als 0,5 mm ist.

9. Heizer oder Verfahren nach Anspruch 8, worin die Additivpartikelgröße oberhalb von 20 Mikron liegt, bevorzugter oberhalb von 50 Mikron und am meisten bevorzugt zwischen 100 und 300 Mikron.

10. Heizer oder Verfahren nach einem der Ansprüche 7 bis 9, worin der durchschnittliche Abstand zwischen den Partikeln in der gleichen Größenordnung wie die Partikelgröße liegt.

11. Heizer oder Verfahren nach einem der Ansprüche 7 bis 10, worin die Partikel anorganisch sind, zum Beispiel Mica, Aluminium, Silica, Glas oder Quarz.

12. Heizer oder Verfahren nach einem der Ansprüche 7 bis 11, worin das partikuläre Additiv vorbehandelt ist, um die Wasseradsorption auf der Partikeloberfläche zu reduzieren.

13. Heizer oder Verfahren nach einem der Ansprüche 7 bis 12, worin die Partikel weniger als etwa 3 Gew.-% der fertigen Beschichtung, bevorzugt etwa 1-3 Gew.-%, darstellen.

14. Heizer oder Verfahren nach einem der Ansprüche 7 bis 13, worin der Beschichtung ein Kesselstein abstoßendes Additiv hinzugefügt wird.

15. Heizer oder Verfahren nach Anspruch 14, worin das Kesselstein abstoßende Additiv weniger als etwa 0,5 Gew.-%, bevorzugter zwischen 0,1-0,3 Gew.-%, in der fertigen Beschichtung bildet.

16. Heizer oder Verfahren nach einem der Ansprüche 7 bis 15, worin die Matrix organisch ist, zum Beispiel PTFE, PES (Polyethersulfon), Polysiloxan, PPS (Polyphenylensulfid), Epoxy oder PET (Polyethylenterephthalat).

17. Heizer oder Verfahren nach einem der Ansprüche 7 bis 16, worin die Matrix Füllmittel wie etwa Pigmente enthält.

18. Heizer oder Verfahren nach einem der Ansprüche 7 bis 17, worin die fertige Beschichtung eine PES-Matrix aufweist, die ein TiO₂-Füllmittel (typischerweise 85-90 Gew.-% PES, 5-10 Gew.-% Füllmittel), 1-3 Gew.-% Micapartikel und 0,1 Gew.-% PTFE enthält.

19. Heizer oder Verfahren nach einem der Ansprüche 7 bis 17, worin die fertige Beschichtung eine PES-Matrix mit TiO₂-Füllmittel, 1 Gew.-% Mica und 0,3 Gew.-% PTFE aufweist.

20. Heizer oder Verfahren nach einem der Ansprüche 7 bis 19, worin die Beschichtung mittels einer Sprüh-, Walz- oder anderen Beschichtungstechnik aufgetragen wird.

21. Heizer oder Verfahren nach Anspruch 20, worin die Beschichtung trockengesprüht wird.

22. Heizer oder Verfahren nach einem vorhergehenden Anspruch, umfassend einen thermischen Sensor (12) unterhalb des unbeschichteten Bereichs.

23. Heizer oder Verfahren nach Anspruch 22, umfassend zwei thermische Sensoren (12) unterhalb des unbeschichteten Bereichs.

24. Flüssigkeitsheizgefäß, umfassend einen Heizer nach einem vorangehenden Anspruch.

25. Flüssigkeitsheizgefäß nach Anspruch 24, das zum Kochen von Wasser ausgelegt ist.

26. Heizer oder Gefäß nach Anspruch 1 oder einem der vorhergehenden Ansprüche 3 bis 25, worin der Teil der zum Wasser weisenden Oberfläche (22) des Heizers, auf dem die Beschichtung (20) vorgesehen ist, über den Rest der Oberfläche (2a) hochsteht.

27. Verfahren nach einem der Ansprüche 2 bis 23, welches das Vorsehen eines Heizers, von dem ein Teil seiner zum Wasser weisenden Oberfläche (22) über den Rest der Oberfläche (2a) hochsteht, und Aufbringen der Behandlung (20) auf den hochstehenden Teil (22) umfasst.

28. Verfahren nach Anspruch 27, worin der Schritt des Aufbringens der Behandlung (20) umfasst, eine Beschichtung mittels einer Walze aufzubringen.

## Revendications

1. Chauffe-eau électrique (2 ; 23) comprenant un revêtement de réduction du bruit (8 ; 20) **caractérisé en ce que** ledit revêtement ne couvre qu'une partie de la surface faisant face à l'eau (2a) de telle sorte qu'une partie de la surface faisant face à l'eau destinée en utilisation à être directement au-dessus d'un détecteur thermique (12) est essentiellement dépourvue dudit revêtement (8; 20).

2. Procédé d'application d'un traitement de réduction du bruit (8 ; 20) à un chauffe-eau électrique (2 ; 23) **caractérisé en ce que** le revêtement n'est appliqué que sur une partie de la surface faisant face à l'eau (2a) du chauffe-eau (2 ; 23) de telle sorte qu'une partie de la surface (2a) destinée en utilisation à être directement au-dessus du détecteur thermique (12) est essentiellement dépourvue dudit revêtement (8 ; 20).

3. Chauffe-eau ou procédé selon la revendication 1 ou 2 dans lequel au moins une partie de la surface faisant face à l'eau (2a) directement au-dessus d'un élément chauffant (4) est revêtue.

4. Chauffe-eau ou procédé selon la revendication 3 dans lequel la partie revêtue a la forme d'un anneau laissant le centre (10) de la surface du chauffe-eau non traitée.

5. Chauffe-eau ou procédé selon l'une quelconque des revendications précédentes, dans lequel ledit chauffe-eau (2 ; 23) comprend un élément chauffant gainé (4) fixé ou attaché à l'intérieur de celui-ci.

6. Chauffe-eau ou procédé selon l'une quelconque des revendications précédentes, dans lequel la partie revêtue comprend des micro-parties adjacentes possédant des propriétés de tension superficielle différentes.

7. Chauffe-eau ou procédé selon l'une quelconque des revendications précédentes, dans lequel le revêtement (8 ; 20) est un revêtement à deux ou plusieurs phases, comprenant des particules qui fournissent des sites de nucléation aux bulles et une matrice qui empêche la formation de bulles.

8. Chauffe-eau ou procédé selon la revendication 7, dans lequel la taille des particules additives est inférieure à 0,5 mm.

9. Chauffe-eau ou procédé selon la revendication 8, dans lequel la taille des particules additives est supérieure à 20 microns, de préférence supérieure à 50 microns et de manière davantage préférée entre 100 et 300 microns.

10. Chauffe-eau ou procédé selon l'une quelconque des revendications 8 à 10, dans lequel l'espace moyen entre les particules est du même ordre que la taille des particules.

11. Chauffe-eau ou procédé selon l'une quelconque des revendications 7 à 10, dans lequel les particules sont inorganiques par exemple mica, aluminium, silice, verre ou quartz.

12. Chauffe-eau ou procédé selon l'une quelconque des revendications 7 à 11, dans lequel l'additif de particules est prétraité afin de réduire l'absorption d'eau sur la surface des particules.

13. Chauffe-eau ou procédé selon l'une quelconque des revendications 7 à 12, dans lequel les particules constituent moins de 3% en poids du revêtement fini, de préférence 1-3% en poids.

14. Chauffe-eau ou procédé selon l'une quelconque des revendications 7 à 13, dans lequel un additif antitartre est ajouté au revêtement.

15. Chauffe-eau ou procédé selon la revendication 14, dans lequel l'additif antitartre constitue moins de 0,5% en poids, de préférence entre 0,1-0,3% en poids du revêtement fini.

16. Chauffe-eau ou procédé selon l'une quelconque des revendications 7 à 15, dans lequel la matrice est organique, par exemple PTFE, PES (polyéthersulfone), polysiloxane, PPS (polyphénylène sulfide), époxy ou PET (polyéthylène téréphtalate).

17. Chauffe-eau ou procédé selon l'une quelconque des revendications 7 à 16, dans lequel la matrice contient des charges telles que des pigments.

18. Chauffe-eau ou procédé selon l'une quelconque des revendications 7 à 17, dans lequel le revêtement fini comprend une matrice de PES contenant une charge de TiO2 (typiquement de 85 à 90% en poids PES, de 5 à 10% en poids de la charge), de 1 à 3% en poids en particules de mica et 0,1% en poids en PTFE.

19. Chauffe-eau ou procédé selon l'une quelconque des revendications 7 à 17, dans lequel le revêtement fini comprend une matrice PES contenant une charge de Ti02, 1% en poids en mica et 0,3% en poids en PTFE.

20. Chauffe-eau ou procédé l'une quelconque revendication 7 à 15, dans lequel ledit revêtement est appliqué au moyen de la technique de projection, de couchage par rouleaux ou d'autres procédés.

21. Chauffe-eau ou procédé selon la revendication 20, dans lequel le revêtement est pulvérisé à sec.

22. Chauffe-eau ou procédé selon l'une quelconque des revendications précédentes, comprenant un détecteur thermique (12) placé en dessous de la partie non revêtue.

23. Chauffe-eau ou procédé selon la revendication 22, comprenant deux détecteurs thermiques (12) placés en dessous de la partie non revêtue.

24. Récipient destiné à chauffer un liquide comprenant un chauffe-eau selon l'une quelconque des revendications précédentes.

25. Récipient destiné à chauffer un liquide selon la revendication 24, adapté pour faire bouillir de l'eau.

26. Chauffe-eau ou récipient selon la revendication 1 ou les revendications 3 à 25, dans lequel la partie de la surface parallèle à l'eau (22) du chauffe-eau sur laquelle est appliqué ledit revêtement (20) est placée au-dessus du reste de ladite surface (2a).

27. Procédé selon l'une quelconque des revendications 2 à 23, comprenant la fourniture d'un chauffe-eau dont une partie de sa surface faisant face à l'eau (22) est placée au-dessus du reste de la surface (2a) et l'application dudit traitement (20) sur ladite partie surélevée (22).

28. Procédé selon la revendication 27, dans lequel ladite étape consistant à appliquer ledit traitement (20) comprend l'application d'un revêtement à l'aide d'un rouleau.
